# EUROPÄISCHE PATENTANMELDUNG

(11) **EP 1 203 895 A2**
(43) Veröffentlichungstag der Anmeldung: **08.05.2002**
(21) Anmeldenummer: 01124989.3
(22) Anmeldetag: 19.10.2001
(51) Int. Cl.: F16D 65/21

(54) **Elektromechanisch betätigbare Scheibenbremse mit einer Feststellbremsanlage**

(30) Priorität: 03.11.2000 DE 10054471
(71) Anmelder: SIEMENS AKTIENGESELLSCHAFT, 80333 München (DE)
(72) Erfinder: Mohr, Volker, 93138 Lappersdorf (DE)

(57) **Zusammenfassung**

Die Scheibenbremse weist einen Elektromotor mit einem Rotor auf, der um eine erste Achse drehbar an einem Bremssattel gelagert ist. Ein Betätigungselement zum Verschieben eines Bremsbelags gegenüber dem Bremssattel ist entlang einer zweiten Achse verschiebbar angeordnet. Die zweite Achse verläuft im Wesentlichen parallel zur ersten Achse und ist von der ersten Achse beabstandet. Ein Mittel zum Umwandeln der Drehbewegung des Rotors in eine Linearbewegung des Betätigungselements weist ein Stirnradgetriebe auf. Die Feststellbremsanlage weist einen Bremsmechanismus und einen Auslöser (a) zum Auslösen des Bremsmechanismus auf. Der Bremsmechanismus ist derart ausgebildet, dass er zum Verriegeln eines Zahnrads des Stirnradgetriebes zwischen die Zähne des Zahnrads eingreift.

## Beschreibung

Die Erfindung betrifft eine elektromechanisch betätigbare Scheibenbremse mit einer Feststellbremsanlage.

Eine solche Scheibenbremse, die insbesondere für die Anwendung in Kraftfahrzeugen geeignet ist, ist beispielsweise in DE 197 11 851 A1 offenbart. Die Scheibenbremse weist einen Bremssattel und einen Elektromotor auf, dessen Stator mit dem Bremssattel fest verbunden ist. Die Drehbewegung des Rotors wird auf eine Motorwelle übertragen, die als Spindelmutter ausgebildet ist. Eine in der Spindelmutter angeordnete Spindel wird durch die Drehbewegung der Motorwelle in eine Linearbewegung bezüglich des Bremssattels versetzt. Die Spindel ist mit einem Bremskolben verbunden, der an einen Bremsbelag angrenzt. Durch Betätigung des Elektromotors kann folglich der Bremsbelag auf eine zu bremsende Bremsscheibe gedrückt werden. Die Feststellbremse weist einen Konusring auf, der axial verschiebbar auf der Motorwelle angeordnet ist. In einer ersten axialen Position lässt der Konusring eine Drehung der Motorwelle in beiden Richtungen ungehindert zu. In einer zweiten axialen Position befindet sich der Konusring in Eingriff mit der Motorwelle und dreht sich mit dieser, wobei eine Drehung der Motorwelle in eine Drehrichtung dazu führt, dass der Konusring im Eingriff mit einem gegenüber der Motorachse drehfesten Sperrring gelangt, wohin gegen eine Drehung der Motorwelle in die andere Drehrichtung dazu führt, dass sich der Eingriff zwischen der Motorwelle und dem Konusring und zwischen dem Sperrring und dem Konusring löst.

Der Platzbedarf dieser Feststellbremsanlage ist aufgrund des erforderlichen Konusrings und Sperrrings groß.

Der Erfindung liegt die Aufgabe zugrunde, eine elektromechanisch betätigbare Scheibenbremse mit einer Feststellbremsanlage anzugeben, die im Vergleich zum Stand der Technik kompakter ist.

Die Aufgabe wird gelöst durch eine elektrisch betätigbare Scheibenbremse mit einer Feststellbremsanlage, wobei die Scheibenbremse folgende Merkmale aufweist: Ein Elektromotor der Scheibenbremse weist einen Rotor auf, der um eine erste Achse drehbar an einem Bremssattel gelagert ist. Ein Betätigungselement zum Verschieben eines Bremsbelags gegenüber dem Bremssattel ist entlang einer zweiten Achse verschiebbar angeordnet, wobei die zweite Achse im Wesentlichen parallel zur ersten Achse verläuft und von der ersten Achse beabstandet ist. Die Scheibenbremse weist ein Mittel zum Umwandeln der Drehbewegung des Rotors in eine Linearbewegung des Betätigungselements auf, wobei dieses Mittel ein Stirnradgetriebe aufweist. Die Feststellbremsanlage weist einen Betätigungsmechanismus und einen Auslöser zum Auslösen des Betätigungsmechanismus auf. Der Betätigungsmechanismus ist derart ausgebildet, dass er zum mechanischen Verriegeln eines Zahnrads des Stirnradgetriebes zwischen die Zähne des Zahnrads eingreifen kann.

Da ein bereits vorhandenes, zum Umwandeln der Drehbewegung des Rotors in eine Linearbewegung des Betätigungselements erforderliches Zahnrad für die Feststellbremsanlage verwendet wird, ist die Scheibenbremse besonders kompakt und leicht. Es ist kein zusätzliches Zahnrad erforderlich. Die Verwendung eines bereits erforderlichen Zahnrads wird dadurch ermöglicht, dass das Betätigungselement und der Elektromotor nicht axial hintereinander oder koaxial umeinander, sondern parallel nebeneinander angeordnet sind.

Die Verwendung des Zahnrads ist auch deshalb möglich, weil bei einem Stirnradgetriebe die Zähne der Zahnräder am Außendurchmesser angebracht sind, und z. B. im Gegensatz zu Zahnrädern eines Planetengetriebes große Teile der Zahnräder von außen zugänglich sind.

Die mechanische Verriegelung durch Eingreifen zwischen die Zähne eines Zahnrads stellt eine sichere und formschlüssige Verriegelung dar im Gegensatz zu einer reib- oder kraftschlüssigen Verriegelung.

Da das Zahnrad lediglich durch Eingreifen des Betätigungsmechanismus zwischen die Zähne des Zahnrads mechanisch verriegelt wird, kann die Feststellbremsanlage sehr einfach konstruiert sein. Beispielsweise weist der Betätigungsmechanismus eine drehbar gelagerte Sperrklinke zum Eingreifen zwischen die Zähne des Zahnrads auf. Die Sperrklinke kann durch eine Feder im unausgelösten Zustand der Feststellbremsanlage vom Zahnrad ferngehalten werden. Der Auslöser kann als Elektrohubmagnet ausgestaltet sein, der die Sperrklinke beim Ansteuern des Elektrohubmagneten entgegen der Zugkraft der Feder in die Zähne des Zahnrads auslenkt.

Damit die Feststellbremsanlage einen besonders geringen Stromverbrauch aufweist, ist es vorteilhaft, wenn die Feststellbremsanlage dergestalt ist, dass sie nur bei der Betätigung des Auslösers Strom verbraucht. In diesem Fall besteht sowohl im "ausgelösten Zustand" als auch im "unausgelösten Zustand" der Feststellbremsanlage kein Energiebedarf. Dazu ist die Scheibenbremse nicht selbsthemmend ausgestaltet. Dies bedeutet, dass das Betätigungselement von einer Position ausgehend, die das Betätigungselement bei starken Bremsen einnimmt, bei abgeschalteten Elektromotor und bei nicht ausgelöster Feststellbremsanlage sich in eine Position verlagert, die das Betätigungselement bei schwächerem oder keinem Bremsen einnimmt. Nach einem Bremsvorgang bewegt sich also das Betätigungselement automatisch, d.h. ohne Betätigung des Elektromotors, wieder zurück in einen Zustand, der einem schwächeren Bremsen oder keinem Bremsen entspricht. Dabei dreht sich das Zahnrad in eine erste Drehrichtung. Die Sperrklinke ist derart relativ zum Zahnrad angeordnet, dass die erste Drehrichtung des Zahnrads entgegengesetzt zur Drehrichtung der Sperrklinke beim Auslösen des Betätigungsmechanismus ist. Dadurch rastet die Sperrklinke zwischen die Zähne des Zahnrads ein, und das Drehmoment des Zahnrads wirkt gegen die Sperrklinke, so dass die Sperrklinke auch nach Abschalten des Auslösers entgegen der Zugkraft der Feder im ausgelösten Zustand der Feststellbremsanlage gehalten wird. Der Abstand vom Lager der Sperrklinke bis zum Zahnrad ist dabei kleiner als der Abstand vom Lager der Sperrklinke bis zum Ende der Sperrklinke, das in das Zahnrad eingreift. Erst wenn der Elektromotor derart betätigt wird, dass das Betätigungselement zum Bremsen in Richtung der zu bremsenden Bremsscheibe bewegt wird, und sich das Zahnrad in Folge dessen in eine zur ersten Drehrichtung entgegengesetzte zweite Drehrichtung dreht, wird die Sperrklinke frei gegeben und durch die Zugkraft der Feder vom Zahnrad entfernt. Die Feststellbremsanlage befindet sich wieder im unausgelösten Zustand. Der Auslöser verbraucht nur beim Übergang vom unausgelösten Zustand zum ausgelösten Zustand Strom.

Die Scheibenbremse ist dabei so ausgelegt, daß das Drehmoment auf die Sperrklinke resultierend aus dem Drehmoment des Zahnrades größer ist als das in umgekehrte Richtung wirkende Drehmoment auf die Sperrklinke resultierend aus der Zugkraft der Feder.

Das Zahnrad kann beispielsweise ein Rotorzahnrad sein, das am Rotor angeordnet ist und Teil des Stirnradgetriebes ist.

Das Mittel zum Umwandeln der Drehbewegung des Rotors in eine Linearbewegung des Betätigungselements kann einen ersten Teil eines Spindelgetriebes oder eines Bewegungsgetriebes aufweisen. In diesem Fall wird das Betätigungselement mindestens durch einen zweiten Teil des Spindelgetriebes bzw.

Bewegungsgetriebes gebildet. Das Betätigungselement kann also eine Spindelmutter bzw. Mutter oder eine Spindel bzw. Schraube aufweisen. Das Mittel zum Umwandeln der Drehbewegung des Rotors in eine Linearbewegung des Betätigungselements weist in diesem Fall ein Spindelgetriebezahnrad auf, das am ersten Teil des Spindelgetriebes bzw. Bewegungsgetriebes angeordnet ist.

Das Rotorzahnrad greift beispielsweise in das Spindelgetriebezahnrad ein.

Zur Reduktion des vom Elektromotor aufzubringenden erforderlichen Antriebsmoments ist es vorteilhaft, wenn der Außendurchmesser des Rotorzahnrads kleiner ist als der Außendurchmesser des Spindelgetriebezahnrads. In diesem Fall kann die Feststellbremsanlage besonders einfach angebracht werden, wenn das Zahnrad, in das der Betätigungsmechanismus eingreift, das Spindelgetriebezahnrad ist, da es den größeren Außendurchmesser aufweist und folglich leichter zugänglich ist.

Zur weiteren Reduktion des vom Elektromotor aufzubringenden erforderlichen Antriebsmoments ist es vorteilhaft, wenn das Stirnradgetriebe mindestens ein erstes Zwischenzahnrad und ein zweites Zwischenzahnrad aufweist. Je mehr Zwischenzahnräder das Stirnradgetriebe aufweist, umso mehr kann das erforderliche Antriebsmoment des Elektromotors reduziert werden. Allerdings steigt mit zunehmender Zahl an Zwischenrädern der Platzbedarf der Scheibenbremse.

Zur Reduktion des Platzbedarfs der Scheibenbremse ist es vorteilhaft, wenn das erste Zwischenzahnrad und das zweite Zwischenzahnrad auf derselben Zwischenwelle angeordnet sind. Dadurch wird das Drehmoment des ersten Zwischenzahnrads auf das zweite Zwischenzahnrad übertragen. Beispielsweise weist das erste Zwischenzahnrad einen größeren Außendurchmesser auf als das zweite Zwischenzahnrad. In diesem Fall greift das erste Zwischenzahnrad in das Rotorzahnrad ein, während das zweite Zwischenzahnrad in das Spindelgetriebezahnrad eingreift. Vorzugsweise ist das Zahnrad, das durch den Betätigungsmechanismus mechanisch verriegelt wird, das erste Zwischenzahnrad.

Die Elektronik zur Betätigung des Auslösers kann direkt an einer elektronischen Regelungseinheit der Scheibenbremse angebaut sein. Diese Steuerungselektronik steuert den Elektromotor, kann Signale eines Kraftsensors zum Messen der Kraft, die das Betätigungselement auf die Bremsscheibe ausübt, und Signale eines Elektromotorrotorlagegebers auswerten und kann die Scheibenbremse regeln.

Im Folgenden wird ein Ausführungsbeispiel der Erfindung anhand der Figuren näher erläutert.
- Figur 1: zeigt einen Querschnitt durch eine erste Scheibenbremse mit einem Bremssattel, einem Halter, einem Bremsbelag, einem weiteren Bremsbelag, einer Felge, einem Bremskolben, einer Spindelmutter, einer Spindel, einem Stator, einem Rotor, einem Rotorzahnrad, einem Kraftsensor, einem Spindelzahnrad, einem Sattelführungsbolzen, einem weiteren Sattelführungsbolzen, einem ersten Lager für den Rotor, einem zweiten Lager für den Rotor, einem Lager für die Spindel, einem Elektromotorrotorlagegeber, elektrischen Leitungen und einer Platine. Ferner ist eine zu bremsende Bremsscheibe dargestellt.
- Figur 2: zeigt eine schematische Seitenansicht eines Stirnradgetriebes der ersten Scheibenbremse mit dem Rotorzahnrad, dem Spindelzahnrad, einem ersten Zwischenzahnrad und einem zweiten Zwischenzahnrad.
- Figur 3: zeigt eine Seitenansicht eines Teils der ersten Scheibenbremse, in der das erste Zwischenzahnrad und eine Feststellbremsanlage bestehend aus einer Sperrklinke, einer Feder und einem Auslöser dargestellt sind.

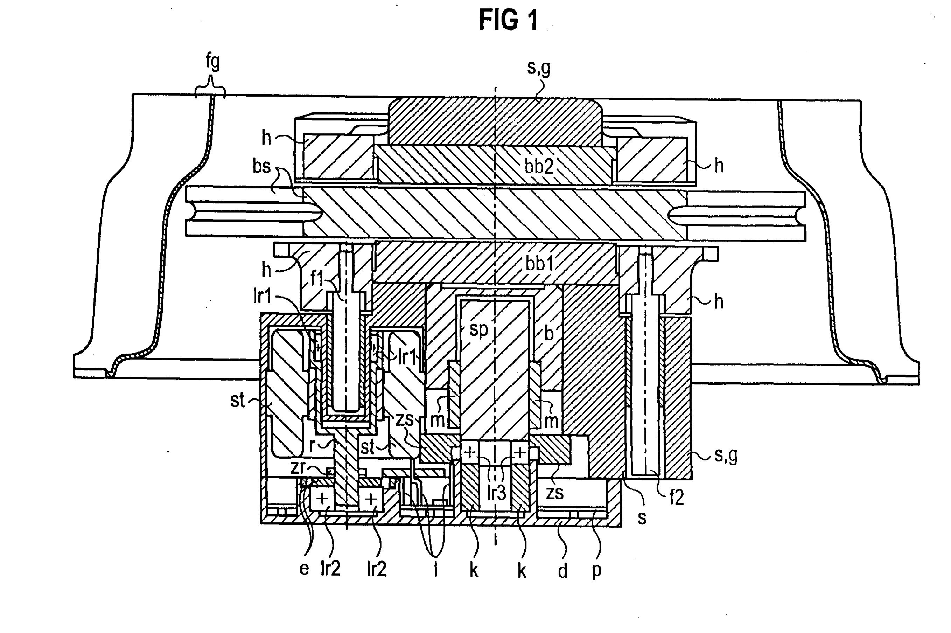

Im Ausführungsbeispiel ist eine Scheibenbremse vorgesehen, die einen als Schwimmsattel ausgebildeten Bremssattel s und einen Halter h aufweist. Der Halter h weist einen Sattelführungsbolzen f1 und einen weiteren Sattelführungsbolzen f2 auf, entlang denen der Bremssattel s verschiebbar gelagert ist (siehe Figur 1).

Die Scheibenbremse weist eine Betätigungseinheit auf, die in einem Deckel d des Bremssattels s montiert ist. Die Betätigungseinheit weist einen Elektromotor auf mit einem Rotor r und einem Stator st. Ein erster Teil des Rotors r ist koaxial um den Sattelführungsbolzen f1 angebracht (siehe Figur 1). Ein zweiter Teil des Rotors r, der an den ersten Teil des Rotors r angrenzt, ist axial versetzt zum Sattelführungsbolzen f1 angeordnet. Der zweite Teil des Rotors r weist einen kleineren Außendurchmesser auf, als der erste Teil des Rotors r. Am zweiten Teil des Rotors r ist ein Rotorzahnrad zr angebracht, das einen kleineren Außendurchmesser aufweist als der erste Teil des Rotors r (siehe Figur 1).

Der Rotor r ist um eine erste Achse a1 drehbar gelagert. Der erste Teil des Rotors r ist an einem ersten Lager lr1 gelagert, während der zweite Teil des Rotors r an einem zweiten Lager lr2 gelagert ist.

Der Stator st des Elektromotors ist um den Rotor r angeordnet und mit dem Bremssattel s fest verbunden.

Die Betätigungseinheit weist ein Betätigungselement bestehend aus einer Spindelmutter m und einem Bremskolben b auf. Die Spindelmutter m ist mit dem Bremskolben b fest verbunden. Der Bremskolben b grenzt an einen Bremsbelag bb1 an. Das Betätigungselement dient dem Verschieben des Bremsbelags bb1 gegenüber dem Bremssattel s. Das Betätigungselement ist entlang einer zweite Achse a2 verschiebbar angeordnet. Die zweite Achse a2 verläuft im wesentlichen parallel zur ersten Achse a1 und ist von der ersten Achse a1 beabstandet.

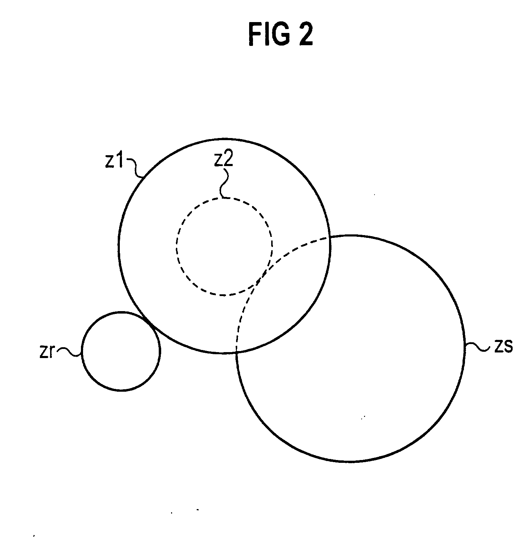

Die Betätigungseinheit weist ferner ein Mittel zum Umwandeln der Drehbewegung des Rotors r in eine Linearbewegung des Betätigungselements bezüglich des Bremssattels s auf. Dieses Mittel besteht aus einer Spindel sp und einem Stirnradgetriebe, zu dem das Rotorzahnrad zr gehört. Das Stirnradgetriebe besteht ferner aus einem Spindelzahnrad zs, das mit der Spindel sp verbunden ist, einem ersten Zwischenzahnrad z1 und einem zweiten Zwischenzahnrad z2. Der Übersichtlichkeit halber sind das erste Zwischenzahnrad z1 und das zweite Zwischenzahnrad z2 in der Figur 1 nicht dargestellt. Das erste Zwischenzahnrad z1 und das zweite Zwischenzahnrad z2 sind an derselben Zwischenwelle zw angeordnet (siehe Figur 2). Das erste Zwischenzahnrad z1 weist einen größeren Außendurchmesser auf als das zweite Zwischenzahnrad z2 und als das Rotorzahnrad zr und greift in das Rotorzahnrad zr ein. Das zweite Zwischenzahnrad z2 greift in das Spindelzahnrad zs ein.

Der Bremssattel s weist einen Vorsprung auf, an den ein weiterer Bremsbelag bb2 angrenzt. Eine zu bremsende Bremsscheibe bs wird zwischen den Bremsbelag bb1 und dem weiteren Bremsbelag bb2 angeordnet. Zum Bremsen der Bremsscheibe bs wird der Elektromotor derart angesteuert, dass aufgrund der Drehbewegung des Rotors r die Spindelmutter m und der Bremskolben b Richtung Bremsscheibe bs verschoben werden. Dadurch wird der Bremsbelag bb1 ebenfalls Richtung Bremsscheibe bs bewegt. Aufgrund der Kraft, die die Bremsscheibe bs auf den Bremsbelag bb1 ausübt, wird der Bremssattel s entlang dem Sattelführungsbolzen f1 und dem weiteren Sattelführungsbolzen f2 bezüglich dem Halter h verschoben, wodurch der Vorsprung des Bremssattels s und dadurch der weitere Bremsbelag bb2 ebenfalls Richtung Bremsscheibe bs verschoben werden. Dadurch wirkt die Bremskraft gleichmäßig auf beide Seiten der Bremsscheibe bs.

Die Scheibenbremse weist zur Steuerung des Elektromotors eine Platine p auf, die an einem Deckel d montiert ist (siehe Figur 1). Ein Kraftsensor k zum Messen der Kraft, die die Scheibenbremse auf die Bremsscheibe bs ausübt, ist am Deckel d montiert und grenzt an ein Lager lr3 der Spindel sp an. Der Kraftsensor k misst somit die Kraft, die die Spindel sp auf den Deckel d ausübt, wobei die Kraft von der Bremsscheibe bs auf den Bremskolben b, vom Bremskolben b auf die Spindelmutter m und von dort auf die Spindel sp übertragen wird.

Ebenfalls mit dem Deckel d verbunden ist ein Elektromotorrotorlagegeber e, der die Drehung des Rotors r erfasst und zur Platine p leitet. Elektrische Leitungen 1 zum Stator st des Elektromotors sind mit der Platine p verbunden.

Die Lager lr1, lr2, in denen der Rotor r gelagert ist, und das Lager lr3, in dem die Spindel sp gelagert ist, sind am Deckel d montiert. Auch die Zwischenwelle zw ist am Deckel d gelagert.

Somit ist die gesamte Betätigungseinheit am Deckel montiert. Die Spindelmutter m mit dem Bremskolben b kann um die Spindel sp geschraubt werden, so daß die Spindelmutter m und der Bremskolben b ebenfalls letzten Endes am Deckel d montiert sind.

Der Deckel d ist mit dem übrigen Gehäuseteil g des Bremssattels s verschraubt.

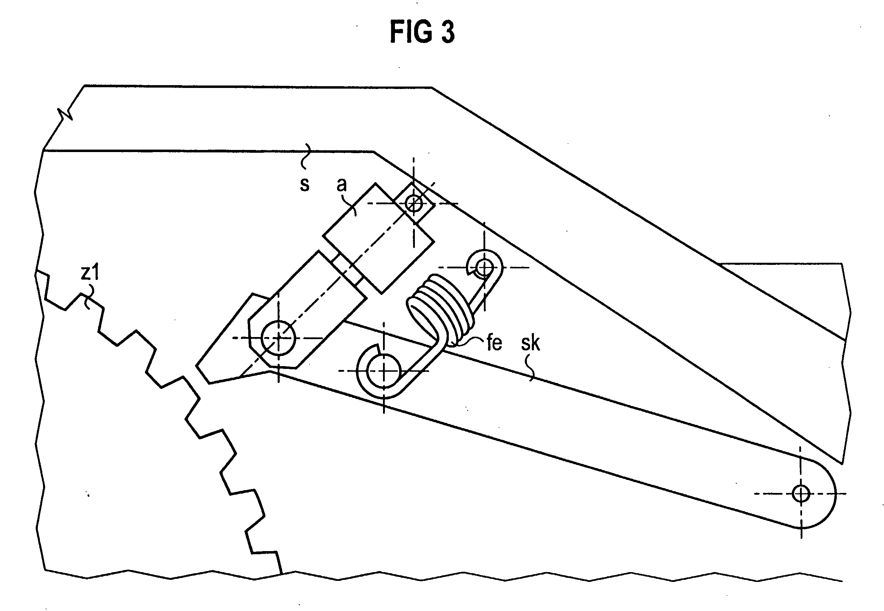

Die Scheibenbremse weist eine Feststellbremsanlage auf, die aus einer am Bremssattel s gelagerte Sperrklinke sk, einer Feder fe und einem Auslöser a besteht (siehe Figur 3). Der Auslöser a ist als Elektrohubmagnet ausgebildet und am Bremssattel s sowie am nichtgelagerten Ende der Sperrklinke sk befestigt. Bei nicht betätigtem Auslöser a hält die Feder fe die Sperrklinke sk vom ersten Zwischenzahnrad z1 zurück. Wird der Auslöser a betätigt, so wird die Sperrklinke sk vom Bremssattel s entgegen der Federkraft se weg gedreht und greift mit seinem nicht am Bremssattel s gelagerten Ende zwischen die Zähne des ersten Zwischenzahnrads z1 ein. Wirkt auf das erste Zwischenzahnrad z1 ein Drehmoment, das eine Drehung des ersten Zwischenzahnrads z1 in eine Drehrichtung entgegengesetzt zu der Drehrichtung der Sperrklinke sk beim Sperren bewirken würde, so wird das erste Zwischenzahnrad z1 mechanisch verriegelt. Die Sperrklinke sk kann in diesem Fall auch nach Ausschalten des Auslösers a nicht in seine Ausgangsposition zurückkehren. Erst wenn auf das erste Zwischenzahnrad z1 ein Drehmoment wirkt, das eine Drehung des ersten Zwischenzahnrads mit einer Drehrichtung, die gleich der Drehrichtung der Sperrklinke sk beim Sperren ist, bewirkt, wird die Sperrklinke sk gelöst und kehrt aufgrund der Zugkraft der Feder fe wieder in seine Ausgangsposition zurück.

Die Scheibenbremse ist derart ausgelegt, dass der Bremskolben b von einer Position ausgehend, die der Bremskolben b bei starken Bremsen einnimmt, bei abgeschaltetem Elektromotor und bei nicht ausgelöster Feststellbremsanlage sich in eine Position verlagert, die der Bremskolben b bei schwächerem oder bei keinem Bremsen einnimmt, so dass sich das erste Zwischenzahnrad z1 während der oben genannten Verlagerung des Bremskolbens b in eine erste Drehrichtung dreht, die entgegengesetzt zur Drehrichtung der Sperrklinke sk beim Sperren des ersten Zwischenzahnrads z1 ist. Die Scheibenbremse ist also nicht selbsthemmend ausgelegt.

## Patentansprüche

1. Elektromechanisch betätigbare Scheibenbremse mit einer Feststellbremsanlage
- mit einem Elektromotor, der einen Rotor (r) aufweist, der um eine erste Achse (a1) drehbar an einem Bremssattel (s) gelagert ist,
- mit einem entlang einer zweite Achse (a2) verschiebbar angeordnetem Betätigungselement zum Verschieben eines Bremsbelags (bb1) gegenüber dem Bremssattel (s), wobei die zweite Achse (a2) im wesentlichen parallel zur ersten Achse (a1) verläuft und von der ersten Achse (a1) beabstandet ist,
- mit einem Mittel zum Umwandeln der Drehbewegung des Rotors (r) in eine Linearbewegung des Betätigungselements, wobei dieses Mittel ein Stirnradgetriebe aufweist,
- bei der die Feststellbremsanlage einen Betätigungsmechanismus und einen Auslöser (a) zum Auslösen des Betätigungsmechanismus aufweist,
- bei der der Betätigungsmechanismus derart ausgebildet ist, daß er zum mechanischen Verriegeln eines Zahnrads des Stirnradgetriebes zwischen die Zähne des Zahnrads eingreifen kann.

2. Scheibenbremse nach Anspruch 1,
- die derart ausgelegt ist, daß das Betätigungselement von einer Position ausgehend, die das Betätigungselement bei starkem Bremsen einnimmt, bei abgeschaltetem Elektromotor und bei nicht ausgelöster Feststellbremsanlage sich in eine Position verlagert, die das Betätigungselement bei schwächerem oder keinem Bremsen einnimmt, so daß sich das Zahnrad während der obengenannten Verlagerung des Betätigungselements in eine erste Drehrichtung dreht,
- bei der der Betätigungsmechanismus der Feststellbremsanlage eine drehbar gelagerte Sperrklinke (sk) zum Eingreifen zwischen die Zähne des Zahnrads aufweist,
- bei der die Sperrklinke (sk) derart relativ zum Zahnrad angeordnet ist, daß die erste Drehrichtung des Zahnrads entgegengesetzt zur Drehrichtung der Sperrklinke (sk) beim Auslösen des Betätigungsmechanismus ist.

3. Scheibenbremse nach Anspruch 2,
- bei der der Betätigungsmechanismus eine Feder (fe) aufweist, die an der Sperrklinke (sk) und am Bremssattel (s) so befestigt ist, daß im unausgelösten Zustand der Feststellbremsanlage die Sperrklinke (sk) aufgrund der Zugkraft der Feder (fe) vom Zahnrad ferngehalten wird,
- bei der der Auslöser (a) einen Elektrohubmagneten aufweist, der derart angeordnet ist, daß durch seine Ansteuerung die Sperrklinke (sk) entgegen der Zugkraft der Feder (fe) in die Zähne des Zahnrads hinein ausgelenkt wird.

4. Scheibenbremse nach einem der Ansprüche 1 bis 3,
- bei der das Mittel zum Umwandeln der Drehbewegung des Rotors (r) in eine Linearbewegung des Betätigungselements einen ersten Teil eines Spindelgetriebes, der um die zweite Achse (a2) drehbar aber nicht verschiebbar am Bremssattel (s) gelagert ist, und ein am ersten Teil des Spindelgetriebes angeordnetes Spindelgetriebezahnrad (zs) aufweist,
- bei der das Betätigungselement mindestens durch einen zweiten Teil des Spindelgetriebes gebildet wird, der durch Drehung des ersten Teils des Spindelgetriebes in eine Linearbewegung entlang der zweiten Achse (a2) versetzbar ist,
- bei der das Mittel zum Umwandeln der Drehbewegung des Rotors (r) in eine Linearbewegung des Betätigungselements ein Rotorzahnrad (zr) aufweist, das am Rotor (r) befestigt ist,
- bei der das Mittel zum Umwandeln der Drehbewegung des Rotors (r) in eine Linearbewegung des Betätigungselements mindestens ein erstes Zwischenzahnrad (z1) und ein zweites Zwischenzahnrad (z2) aufweist,
- bei der das erste Zwischenzahnrad (z1) und das zweite Zwischenzahnrad (z2) auf derselben Zwischenwelle (zw) angeordnet sind,
- bei der das erste Zwischenzahnrad (z1) einen größeren Außendurchmesser aufweist als das zweite Zwischenzahnrad (z2) und in das Rotorzahnrad (zr) eingreift,
- bei der das zweite Zwischenzahnrad (z2) in das Spindelgetriebezahnrad (zs) eingreift,
- bei der das Zahnrad, das durch den Betätigungsmechanismus mechanisch verriegelt wird, das erste Zwischenzahnrad (z1) ist.
